# EUROPÄISCHE PATENTSCHRIFT

(11) **EP 1 735 564 B1**
(45) Veröffentlichungstag und Bekanntmachung des Hinweises auf die Patenterteilung: **28.05.2008**
(21) Anmeldenummer: 05716564.9
(22) Anmeldetag: 08.04.2005
(51) Int. Cl.: F21V 21/04, F21S 8/04, F21S 8/02

(54) **EINBAULEUCHTE ZUM EINBAU IN EINE ÖFFNUNG EINER WAND ODER IM BODEN**
FITTED LAMP FOR INSTALLATION IN AN OPENING OF A WALL OR THE FLOOR
LAMPE INTEGREE A INSERER DANS UNE OUVERTURE PRATIQUEE DANS UNE PAROI OU DANS LE SOL

(30) Priorität: 08.04.2004 DE 202004005794 U
(43) Veröffentlichungstag der Anmeldung: 27.12.2006
(73) Patentinhaber: Zumtobel Lighting GmbH & Co. KG, 32657 Lemgo (DE)
(72) Erfinder: GLOCK, Markus, 32657 Lemgo (DE); HOLTMANN, Frank, 32130 Enger (DE)
(74) Vertreter: Thun, Clemens
(86) Internationale Anmeldenummer: PCT/EP2005/003737
(87) Internationale Veröffentlichungsnummer: WO 2005/098313

(56) Entgegenhaltungen:
- EP-A- 0 870 982
- EP-A- 1 455 135
- DE-A1- 10 013 087
- DE-U1- 9 311 146

## Beschreibung

Die Erfindung betrifft eine Einbauleuchte nach dem Oberbegriff des Anspruchs 1.

Eine Einbauleuchte besteht aus zwei Hauptteilen, nämlich einem in eine Einbauöffnung verankerbaren Einbaurahmen und einem Leuchtelementen-Träger, der bei der Montage in den Einbaurahmen eingesetzt und durch eine Verbindungsvorrichtung mit dem Einbaurahmen verbunden wird.

Bei einer Decken- oder Wand-Einbauleuchte sind die Belastungen, denen der Leuchtelementen-Träger ausgesetzt ist, verhältnismäßig gering und hauptsächlich durch das Eigengewicht bestimmt.

Eine Bodeneinbauleuchte ist dagegen beträchtlichen Belastungen ausgesetzt, z.B. durch Begehung. Da es sich bei Einbauleuchten um Gegenstände handelt, die nicht nur bei der Montage, sondern auch bei einer Wartung oder Reparatur zugänglich sein müssen, ist eine einfache und schnelle Montage bzw. Demontage gewünscht, wobei eine hinreichende Festigkeit der Einbauverbindung vorhanden sein muss.

Die DE 100 13 087 A1 beschreibt eine Einbauleuchte mit einem Haltering für Zusatzbauteile, wobei der Haltering durch Steckelemente und Steckzapfen an einem Montagering gehalten wird.

Der Erfindung liegt deshalb die Aufgabe zugrunde, eine Einbauleuchte der im Oberbegriff des Anspruchs 1 angegebenen Art so auszugestalten, dass bei Gewährleistung einer stabilen Befestigung die Montage mit geringem Handhabungs- und Zeitaufwand durchführbar ist.

Diese Aufgabe wird durch die Merkmale des Anspruchs 1 gelöst.

Vorteilhafte Weiterbildungen der Erfindung sind in den zugehörigen Unteransprüchen beschrieben.

Bei der erfindungsgemäßen Einbauleuchte nach dem Anspruch 1 ist der Leuchtelementen-Träger mit dem Einbaurahmen durch einen Bajonettverschluss und eine Rastvorrichtung verbindbar. Beide Verbindungsvorrichtungen eignen sich für eine einfache, handhabungsfreundliche und schnelle Montage bzw. Demontage, wobei der Leuchtelementen-Träger durch eine auf ihn ausgeübte Bewegung in seine Befestigungsstellung bringbar ist, ohne dass zusätzliche Befestigungselemente montiert, z.B. verschraubt, werden müssen. Dabei zeichnet sich sowohl ein Bajonettverschluss als auch eine Rastvorrichtung durch Stabilität aus.

Ein Bajonettverschluss eignet sich vorzugsweise für eine Decken- oder Wand-Einbauleuchte, die im montierten Zustand nur geringen Drehmoment-Belastungen unterliegt. Bei einer Bodeneinbauleuchte ist dagegen mit Drehmoment-Belastungen zu rechnen, und deshalb eignet sich eine Rastvorrichtung gut. Erfindungsgemäß eignet sich besonders gut eine Verbindungsvorrichtung, die sowohl eine Rastvorrichtung als auch einen sich etwa gegenüberliegend angeordneten Bajonettverschluss umfasst. Bei dieser Kombination ist eine handhabungsfreundliche Montage bzw. Demontage gewährleistet, weil nur ein Rastelement bewegt zu werden braucht, das geeignet ist, einer Drehmoment-Belastung einen großen Widerstand entgegenzusetzen.

Ein Bajonettverschluss und eine Rastvorrichtung führen zu dem weiteren Vorteil, dass die Verbindungselemente von außen nicht sichtbar sind und deshalb die Einbauleuchte nicht beeinträchtigen, z.B. im Sinne von Vertiefungen, in denen sich Schmutz oder Staub ansammeln kann oder als die Sicht auf die Einbauleuchte beeinträchtigende Konturen.

Es ist aus vergleichbaren Gründen auch vorteilhaft, ein Rastelement der Rastvorrichtung so bewegbar auszubilden, dass es zu seiner Bewegung, insbesondere in seine Entrastungsstellung, von außerhalb der Einbauleuchte bzw. des Leuchtelementen-Trägers zugänglich ist. Dies kann z.B. durch eine Druckausübung und ein Verschieben des Rastelements durch eine kleine Durchführungsöffnung, z.B. mit einem Stift, erfolgen. Eine solche Zugangsöffnung kann zum einen klein und zum anderen kaum sichtbar und nicht störend ausgebildet werden.

Eine weitere Anforderung an Einbauleuchten besteht darin, diese möglichst niedrig auszubilden, so dass auch die Einbauöffnung mit geringer Tiefe ausgebildet werden kann. Es ist in vielen Fällen auch gefordert, die Einbauleuchte in niedrige Aufnahmekörper einzubauen.

Gemäß einer vorteilhaften Weiterbildung der Erfindung weist deshalb bei der Einbauleuchte nach Anspruch 9 der Leuchtelement-Träger einen transparenten Lichtleiterblock und seitlich von diesem Anschlussmittel für mindestens ein Leuchtelement auf, derart, dass von dem Leuchtelement abgegebenes Licht seitlich in den Lichtleiterblock einstrahlt und von diesem zum zu beleuchtenden Raum hin umgelenkt wird.

Bei der Einbauleuchte nach Anspruch 10 ist der Leuchtelementen-Träger zur Aufnahme von Leuchtdioden ausgebildet.

Beide erfindungsgemäßen Ausgestaltungen ermöglichen die angestrebte niedrige Baugröße. Bei der Einbauleuchte nach Anspruch 9 wird dies dadurch erreicht, dass Leuchtelemente seitlich von dem Lichtleiterblock angeordnet sind, wodurch die angestrebte geringe Bauhöhe erreicht wird. Dabei ist durch die Lichtumlenkung im Lichtleiterblock die Lichtabstrahlung zum zu beleuchtenden Raum hin gewährleistet.

Bei der Einbauleuchte nach Anspruch 10 ist der Leuchtelementen-Träger zur Aufnahme von Leuchtdioden ausgebildet. Da Leuchtdioden kleine Bauteile sind, wird auch hierdurch die angestrebte niedrige Bauhöhe erreicht. Darüber hinaus zeichnen sich Leuchtdioden durch eine lange Lebensdauer, aus wodurch sich eine wartungsfreundliche Einbauleuchte ergibt. Ein weiterer Vorteil besteht darin, dass Leuchtdioden im Funktionsbetrieb kaum Wärme entwickeln und sich deshalb diese Einbauleuchte vorzüglich für solche die Einbauleuchte aufnehmende Aufnahmekörper eignen, die wärmeempfindlich sind oder in wärmeempfindlichen Räumen angeordnet sind und/oder aus einem wärmeempfindlichen, z.B. brennbaren Material bestehen. Diese Leuchte eignet sich deshalb auch vorzüglich für einen Aufnahmekörper aus Holz und insbesondere für den Einbau in einen Holzboden.

Weitere Weiterbildungsmerkmale ermöglichen eine einfache, kleine und kostengünstig herstellbare Konstruktion und zu einer Verbesserung und Vereinfachung der Zugänglichkeit und der Montage bzw. Demontage.

Nachfolgend werden vorteilhafte Ausgestaltungen der Erfindung anhand von Ausführungsbeispielen und Zeichnungen näher erläutert. Es zeigt:
Fig. 1 eine erfindungsgemäße Einbauleuchte in der Draufsicht;
Fig. 2 den Schnitt II-II in Fig. 1;
Fig. 3 den Schnitt III-III in Fig. 1;
Fig. 4 den Schnitte IV - IV in Fig. 3;
Fig. 5 die Einbauleuchte nach Fig. 1 ohne eine Abdeckplatte;
Fig. 6 die Einbauleuchte nach Fig. 1 ohne die Abdeckplatte, ein Gehäuseoberteil und einen Deckel;
Fig. 7 eine Einbaurahmen der Einbauleuchte in der Draufsicht;
Fig. 8 das Gehäuseoberteil in der Draufsicht;
Fig. 9 die Teil-Seitenansicht VIII in Fig. 7;
Fig. 10 die Einbauleuchte in einer sogenannten Explosionsdarstellung ihrer Bauteile.

Die in ihrer Gesamtheit mit 1 bezeichnete Einbauleuchte weist einen Einbaurahmen 2 auf, der in einer Einbauöffnung 3 eines Leuchten- oder Aufnahmekörpers 4, beim vorliegenden Ausführungsbeispiel eines Bodens, mit einer Oberfläche 4a von dem zu beleuchtenden Raum 5 her, hier von oben, einsetzbar und verankerbar ist. Die horizontale Querschnittsform der Einbauöffnung 3 und des darin einsetzbaren Abschnitts des Einbaurahmens 2 ist beim vorliegenden Ausführungsbeispiel rund. Dieser Querschnitt kann jedoch auch eine andere Form aufweisen, was noch beschrieben wird.

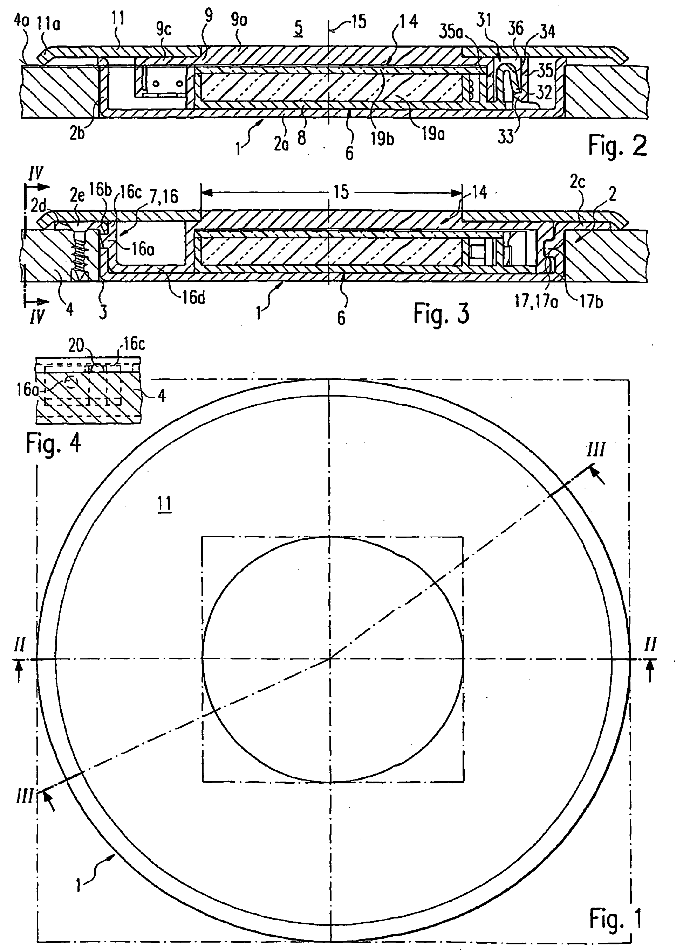

Wie aus den Fig. 2 und 3 zu entnehmen ist, weist der Einbaurahmen 2 die Form eines durch eine Bodenwand 2a und einer sich davon nach oben erstreckenden Umfangswand 2b gebildeten Dosenkörpers auf, wobei vom freien Rand der Umfangswand 2b ein Flansch 2c nach außen absteht. Die vorzugsweise lösbare Verankerung des Einbaurahmens 2 im Aufnahmekörper 4 kann auf verschiedene Art und Weise erfolgen. Beim Ausführungsbeispiel ist er im Aufnahmekörper 4 verschraubbar. Hierzu sind im Flansch 2c zwei oder mehrere auf dem Umfang verteilt angeordnete Schraubenlöcher 2d für in den Aufnahmekörper 4 einschraubbare Schrauben 2e, insbesondere Senklöcher für Senkkopfschrauben, angeordnet.

Außer dem Einbaurahmen 2 weist die Einbauleuchte leinen Leuchtelementen-Träger 6 in einer vormontierbaren Einbaueinheit auf, der in den Einbaurahmen 2 einsetzbar und durch eine Befestigungsvorrichtung 7 lösbar befestigbar ist. Der Träger 6 ist aus mehreren Teilen vormontiert, und er besteht aus dem Gehäuseunterteil 8, das vorzugsweise kastenförmig ausgebildet ist, dem Gehäuseoberteil 9, einem die Ränder des Gehäuseoberteils 9 und des Einbaurahmens 2 überdeckenden Abdeckrings 11, Anschlußmittel für eine oder mehrere Leuchtelemente und eine Licht-Abstrahlanordnung im Bereich eines Lichtauslasses 15 auf.

Die wesentlichen vorbeschriebenen Teile sind in flacher Bauweise ausgeführt, nämlich mit einer Breite, die größer ist als die zugehörige Höhe des jeweiligen Bauteils. D. h. die Breite dieser Bauteile erstreckt sich quer, vorzugsweise rechtwinklig zur Mittelachse 15a des vom Abdeckring 11 umgebenen Lichtauslasses 15, der beim Ausführungsbeispiel nach oben gerichtet ist. Die möglichst flache Bauweise wird angestrebt, um die Tiefe der Einbauöffnung 3 möglichst gering zu halten und die Einbauleuchte 1 auch in flachen Aufnahmekörpern 4 bzw. Böden, insbesondere Holzböden, einbauen zu können.

Die Befestigungsvorrichtung 7 ist eine solche, deren Befestigungselemente von oben nicht sichtbar sind, um Angriffskanten oder Vertiefungen bzw. Spalte zu vermeiden, in denen sich Schmutz sammeln kann. Es wird auch die Sichtfläche der Einbauleuchte 1 verbessert. Um die Montage und Demontage zu verbessern, ist die Befestigungsvorrichtung 7 eine Schnellschlußverbindung, insbesondere eine Rastvorrichtung16 mit einem an dem einen Befestigungsvorrichtungsteil quer zur Einsteckrichtung bewegbar angeordneten Rastzapfen 16a, der in eine Rastausnehmung 16b an dem anderen Befestigungsvorrichtungsteil einrastbar ist. Die Befestigungsvorrichtung 7 kann auch ein sogenannter Bajonettverschluß 17 sein mit einem Bajonettzapfen 17a an dem einen Befestigungsvorrichtungsteil und einer Bajonettnut 17b an dem anderen Befestigungsvorrichtungsteil, in die der Bajonettzapfen 17a durch Drehen des ihn aufweisenden Bauteils einführbar ist. Für eine sichere Befestigung ist es vorteilhaft, jeweils etwa einander gegenüberliegend zwei Rastzapfen 16a mit einer jeweils zugehörigen Rastausnehmung 16b oder Bajonettzapfen 17a mit einer jeweils einer zugehörigen Bajonettnut 17b vorzusehen. Da der Rastzapfen 16a für seine Verrastung oder Entrastung jeweils unabhängig von ihn tragenden Befestigungsvorrichtungsteil bewegbar ist, ist es vorteilhaft, den eine Riegelfunktion erfüllenden Rastzapfen 16a so anzuordnen, daß er durch eine von außen durchführbare Manipulation entrastbar ist. Dies ist bei einem Bajonettverschluß 17 nicht erforderlich, da das bewegliche Verschlußelement mit dem es tragenden Befestigungsvorrichtungsteil gedreht wird und hierzu - beim Ausführungsbeispiel der Träger 6 - manuell gegriffen und gedreht werden kann. Aufgrund dieser Drehbarkeit kann der Bajonettverschluß 17 durch eine Drehung in die entgegengesetzte Richtung wieder gelöst werden. Es ist deshalb vorteilhaft, einen Bajonettverschluß 17 mit einer etwa gegenüberliegend angeordneten Rastvorrichtung16 zu kombinieren, wie es beim Ausführungsbeispiel der Fall ist. Dabei kann die Zugänglichkeit zum Rastzapfen 16a durch eine Nut 20 in der Unterseite des Abdeckrings 11 oder im Flansch 2c gebildet sein, durch die hindurch der vorzugsweise durch eine Federkraft nach außen in seine Raststellung beaufschlagte Rastzapfen 16a zugänglich ist und in seine vorzugsweise nach innen versetzte Endraststellung bewegbar ist.

Beim Ausführungsbeispiel ist der Rastzapfen 16a an einem Federarm 16c so angeordnet, daß er selbsttätig in die Rastausnehmung 16b einfedert. Dabei ist die Rastausnehmung 16b vorzugsweise in der Umfangswand 2b angeordnet und der Rastzapfen 16a vorzugsweise am Träger 6 oder am Gehäuseoberteil 8 angeordnet.

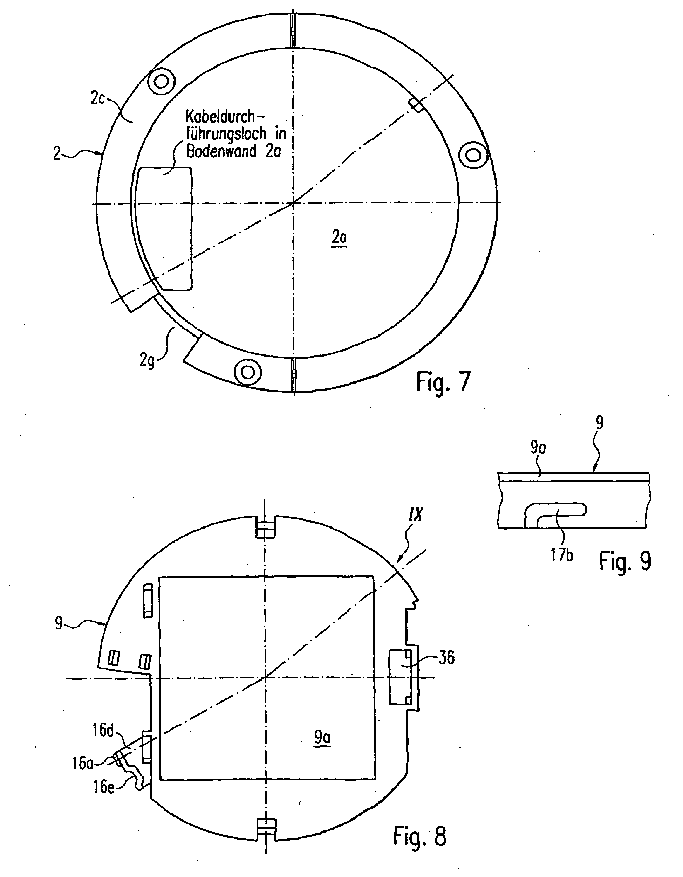

Wie insbesondere Fig. 3 und 7 erkennen lassen, ist der Federarm 16c mit dem Träger 6 bzw. dem Gehäuseoberteil 9 verbunden, und er kann sich nach oben erstrecken und durch einen unteren Steg 16d mit dem übrigen Körper des Gehäuseoberteils 9 vorzugsweise einteilig verbunden sein.

Wie insbesondere Fig. 9 erkennen läßt, weist das Gehäuseunterteil 8 die Form eines oberseitig offenen Kastens mit im horizontalen Querschnitt vorzugsweise rechteckiger Form auf, in dessen Hohlraum 18 ein Lichtleiterblock 14 sitzt, der vorzugsweise flach und in Form einer einstückigen oder zweistückigen Scheibe 14a, 14b ausgebildet ist. Um die angestrebte flache Bauweise zu erreichen, ist der Lichtleiterblock 14 eine z. B. viereckige Scheibe, in die Licht von vorzugsweise einander gegenüberliegend angeordneter insbesondere mehrerern Leuchtelemente 13, insbesondere Leuchtdioden, schmalseitig einkoppelbar ist, wobei das wenigstens eine Leuchtelement 13 sich in der Höhe der Scheibe neben dieser befindet. Die Scheibe weist an ihrer Oberseite eine das Licht auskoppelnde Struktur auf. Solche Lichtleiter mit quer zur Einstrahlrichtung gerichteter Lichtabstrahlung sind an sich bekannt. Beim Ausführungsbeispiel ist eine Einkoppelscheibe 19a vorgesehen, in die das Licht schmalseitig einkoppelbar ist und an deren Oberseite eine Auskoppelscheibe 19b angeordnet und so mit der Einkoppelscheibe 19a verbunden ist, daß das Licht in die Auskoppelscheibe 19b geleitet und von dieser breitseitig nach oben ausgekoppelt bzw. abgestrahlt werden kann. Die Auskoppelscheibe 19b, die etwas größer sein kann und die Einkoppelscheibe 19a seitlich überragen kann, kann mit der Oberseite der Einkoppelscheibe 19a verklebt sein.

Die vorzugsweise mehreren und einander gegenüberliegend angeordneten Leuchtelemente 13 bzw. Leuchtdioden sind vorzugsweise jeweils an einer Leiterplatte 21 angeordnet und elektrisch leitend verbunden, die vorzugsweise von oben in eine Steckfassung 22 so einsteckbar sind, daß die Leuchtelemente 13 durch Ausnehmungen 23 in den Kastenwänden des Gehäuseunterteils 8 in die gegenüberliegende schmale Stirnseite der Einkoppelscheibe 19a einstrahlen können. Die wenigstens eine Leiterplatte 21 ist durch eine sich um die Einkoppelscheibe 19a erstreckende elektrische Verdrahtung 24 mit einem Steckanschlußteil 25 verbunden, das sich im Freiraum 26 zwischen einer sich bezüglich dem Einbaurahmen 2 sekantial erstreckenden Kastenwand 27 und der Umfangswand 2b angeordnet ist. Im Freiraum 26 kann gegebenenfalls auch ein elektrisches Betriebsgerät angeordnet sein.

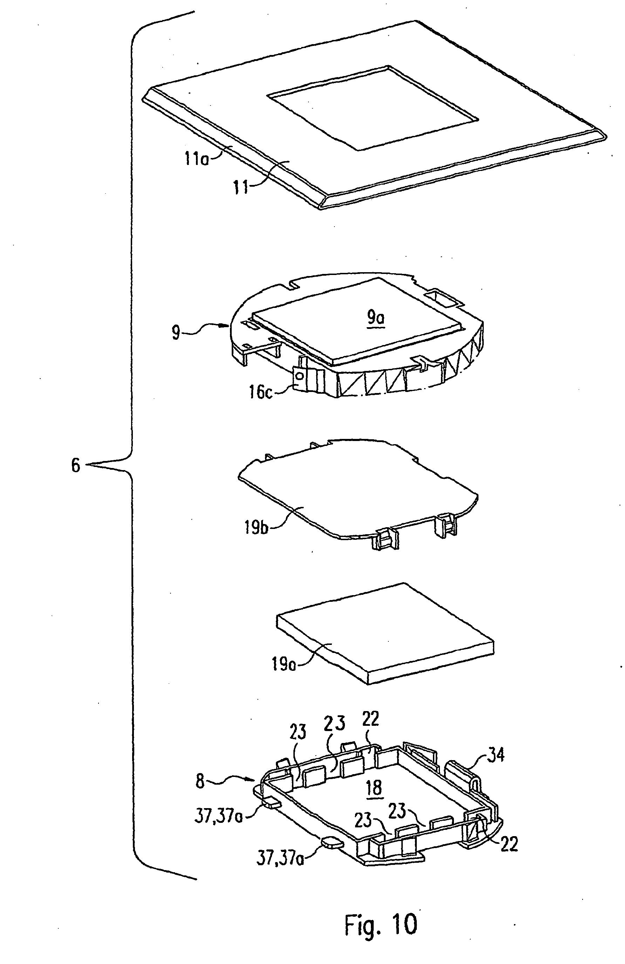

Wie sich insbesondere aus Fig. 2 sowie 3 und 10 entnehmen lässt, weist das Gehäuseoberteil 9 im mittleren Bereich seiner Oberseite einen Deckelscheibenabschnitt 9a aus lichtdurchlässigem Material, insbesondere Kunststoff, vorzugsweise PC auf, der die Auskoppelscheibe 19b überdeckt und Teil einer Abstrahlanordnung ist, aus der das Licht nach oben abstrahlbar ist. Der Deckelscheibenabschnitt 9a paßt mit einem oberseitigen Ansatz in die Öffnung des Abdeckrings 11, wobei dieser und der Ansatz oberseitig in einer Ebene abschließen. Der Abdeckring 11 und das Gehäuseoberteil 9 können fest bzw. unlösbar miteinander verbunden sein und eine Baueinheit bilden. Beim Ausführungsbeispiel ist der sich im wesentlichen eben erstreckende Abdeckring 11 in seinem inneren Randbereich mit dem Gehäuseoberteil 9 verklebt, wobei das Gehäuseoberteil 9 einen den Ansatz umgebenden Randbereich 9c aufweist, auf dem der Abdeckring 11 aufliegt und vorzugsweise verklebt ist. Am Außenrand weist der Abdeckring 11 einen nach unten abgewinkelten Rand 11a auf, der den Flansch 2c umgreift. Wenn die Höhe des Flansches 2c bzw. des Randes 11a der Querschnittsgröße des Stiftes zum Entrasten des Rastzapfens 16a entspricht, braucht die Ausnehmung 20 für den nicht dargestellten Stift nur im nach unten abstehenden Rand 11a angeordnet zu sein. Die Zugänglichkeit unmittelbar oder mittelbar zum Rastzapfen 17a kann durch eine ein weiterführendes Loch bildende Unterbrechung 2g im Flansch 2c gewährleistet. Wie Fig. 7 zeigt, können die Ausnehmung 20 und die Unterbrechung 2g bezüglich des Rastzapfens 17a in Umfangsrichtung versetzt sein. Wesentlich ist, daß der Rastzapfen 17a oder der Federarm 16c mit dem Stift zugänglich und in die Entrastungsstellung bewegbar ist. Um für den nicht dargestellten Stift eine sicher Führung zu haben, ist im Federarm 16c eine in Fig. 8 dargestellte Vertiefung 16e ausgebildet, in der der Stift einfaßt und sicher geführt ist.

Der Träger 6 ist mit seinen Einzelteilen dadurch zusammengehalten, daß das Gehäuseoberteil 9 und das Gehäuseunterteil 8 mit der oder den dazwischen zentrierten Scheiben 19a, 19b durch eine Verbindungsvorrichtung 31 miteinander verbunden sind. Diese ist vorzugsweise durch eine Schnellschlußverbindung, insbesondere eine Rastvorrichtung mit einer einfederbaren Rastnase 32 gebildet, die in der Verrastungsstellung eine Rastkante 33 hintergreift. Beim Ausführungsbeispiel ist die Rastvorrichtung31 an einer Seite des Trägers 6 angeordnet und z. B. durch einen sich vom Gehäuseunterteil 8 nach oben, z. B. hakenförmig, erstreckenden Federarm 34 gebildet, der einen die Rastkante 33 bildenden Vorsprung an einem Wandteil 35 des Gehäuseoberteils 9 angeordnet ist. Das Wandteil 35 kann mit einer nach innen versetzten Kastenwand 35a des Gehäuseoberteils 9 ein Steckloch 36 im Gehäuseoberteil 9 für den Federarm 34 begrenzen.

Der Rastvorrichtung 31 gegenüberliegend kann eine zweite Rastvorrichtung zwischen dem Gehäuseoberteil 9 und dem Gehäuseunterteil 8 angeordnet sein. Beim Ausführungsbeispiel ist an dieser Seite eine Steckverbindung 37 mit einem oder zwei einen Abstand voneinander aufweisenden Steckzapfen 37a an dem einen Teil und eine diesen aufnehmende Steckausnehmung (nicht dargestellt) an dem anderen Teil vorgesehen. Wie Fig. 9 zeigt, können der wenigstens eine Steckzapfen 37a seitlich vom Gehäuseunterteil 8 abstehen, wobei die Steckausnehmung in eine gegenüberliegenden Kastenwand des Gehäuseoberteils 9 angeordnet sein kann. Zum Verrasten werden das Gehäuseunterteil 8 und das Gehäuseoberteil 9 in einer zueinander gekippten Position durch die Steckverbindung 37 miteinander verbunden und dann aufeinanderzu gekippt und durch die Rastvorrichtung 31 verrastet. Ein Lösen ist durch ein Einbiegen des Federarms 36 z. B. dadurch möglich, daß ein Stift durch ein andeutungsweise dargestelltes Durchführungsloch 39 im Wandteil 35 gegen den Federarm 34 drückbar ist.

Zum Montieren des Leuchtelementen-Trägers 6 im Einbaurahmen 3 ist der Träger 6 in einer Drehposition in den Einbaurahmen 3 einzusetzen, in der die in Fig. 7 sichtbare nach unten gerichtete Öffnung 17c der Bajonettnut 17b sich über dem Bajonettzapfen 17a befindet. Wenn am Rastzapfen 16a oder an der Umfangswand 2b eine schräge oder gerundete Einführungsfläche angeordnet ist, kann der Träger 6 in die Einbauöffnung 3 abgesenkt werden, wobei der Rastzapfen 16a selbsttätig in seine Entrastungsstellung gedrängt wird. Wenn am Rastzapfen 16a oder an der Umfangswand 2b keine Einführungsfläche vorhanden ist, bedarf es eines manuellen Einbiegen des Federarms 16c. Durch ein nachfolgendes Drehen des Trägers 6 gelangt der Bajonettverschluss 17 in seine Schließstellung, in der sein Bajonettzapfen 17a den unteren Begrenzungsrand der Bajonettnut 17b übergreift, wobei der Rastzapfen 16a selbsttätig in die Rastausnehmung 16b einfedert.

Zum Lösen ist der Rastzapfen 16a von außen zugänglich, um in seine Entrastungsstellung bewegt zu werden. Dies erfolgt in vorbeschriebener Weise durch den Stift, der in die Ausnehmung 20 oder 29 eingeführt wird, um den Rastzapfen 16a radial einwärts in seine Entrastungsstellung zu drücken. Danach erfolgt die Demontage durch Drehen und Abheben des Trägers 6.

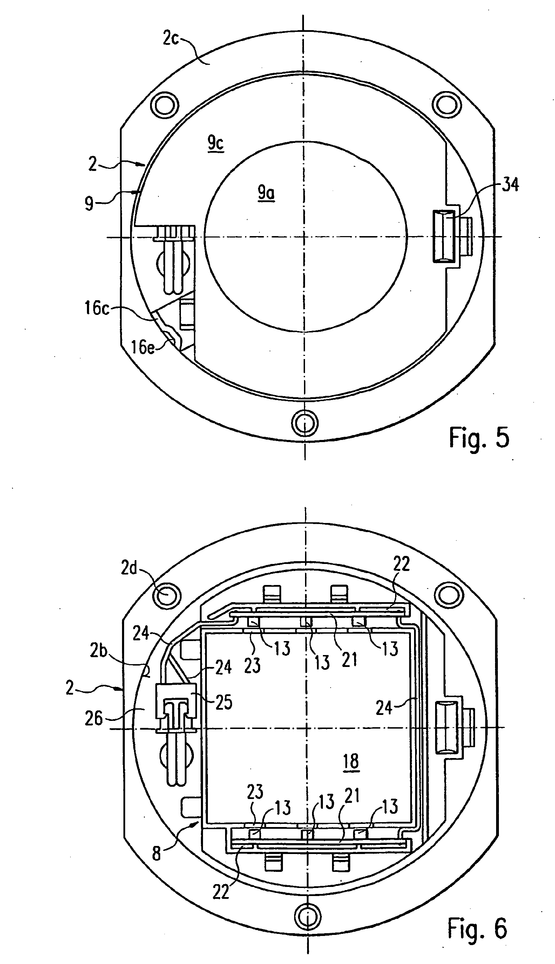

Wie Fig. 5 zeigt, kann der Flansch 2c beiderseits abgeflacht sein.

Wie die Fig. 1 und 9 zeigen, können der Abdeckring 11 außen und/oder innen viereckig oder rund und der Ansatz 9a angepasst viereckig oder rund ausgebildet sein. Dabei sind die übrigen Teile 2, 8, 14 gleich und passend ausgebildet.

Wie bereits das Gehäuseoberteil 9, kann auch die Auskoppelscheibe 19b aus transparentem Kunststoff, insbesondere PC, bestehen. Die Einkoppelscheibe 19a besteht vorzugsweise ebenfalls aus transparentem Kunststoff, insbesondere PMMA. Das Gehäuseunterteil 8 besteht vorzugsweise ebenfalls aus Kunststoff, z.B. PC. Der Einbaurahmen 2 kann aus Metall, insbesondere Stahl bestehen und korrosionsbeständig sein oder korrosionsbeständig beschichtet sein, z.B. feuerverzinkt sein.

Es ist von Vorteil, unterhalb der transparenten Wand des Gehäuseoberteils 9 Symbole anzuordnen, die z.B. durch Linien dargestellt sind, die nicht oder nur teilweise lichtdurchlässig sind. Solche Symbole sind vom zu beleuchtenden Raum her sichtbar, und sie können z.B. einer Verschönerung der Leuchte, einer Wegweisung (Weganzeige durch Pfeile), als Reklame oder als Informationsanzeige für Personen im zu beleuchtenden Raum dienen. Es kann z.B. jeweils wenigstens ein Symbol zwischen der Einkoppelscheibe 19a und der Auskoppelscheibe 19b und/oder zwischen letzterer und der transparenten Deckenwand des Gehäuseoberteils 9 angeordnet sein. In diesen Positionen sind die Symbole vor Beschädigungen geschützt angeordnet. Die Symbole können auf wenigstens einer lichtdurchlässigen Folie angeordnet, z.B. gedruckt sein, die somit als Symbolträger dient und wegen ihrer geringen Dichte die Konstruktionshöhe der Einbauleuchte nicht beeinträchtigt.

## Patentansprüche

1. Einbauleuchte (1) zum Einbau in eine Öffnung (3) einer Wand oder im Boden, mit einem in der Öffnung (3) zu verankernden Einbaurahmen (2) und einem in den Einbaurahmen (2) versenkbaren Leuchtelementen-Träger (6),
**dadurch gekennzeichnet,**
**dass** der Leuchtelementen-Träger (6) mit dem Einbaurahmen (2) durch einen Bajonettverschluss (17) und eine Rastvorrichtung (16) verbindbar ist, wobei der Bajonettverschluss (17) und die Rastvorrichtung (16) im wesentlichen einander gegenüberliegend in den Randbereichen des Einbaurahmens (2) bzw. Leuchtelementen-Trägers (6) angeordnet sind.

2. Einbauleuchte nach Anspruch 1,
**dadurch gekennzeichnet,**
**dass** der Leuchtelementen-Träger (6) um seine Mittelachse (15a) im Einbaurahmen (6) drehbar ist, und der Einbaurahmen (2) und der Träger (6) einen runden Querschnitt aufweisen.

3. Einbauleuchte nach einem der vorherigen Ansprüche,
**dadurch gekennzeichnet,**
**dass** eine Bajonettnut (17b) im Umfangsbereich des Leuchtelementen-Trägers (6) angeordnet ist und ein damit zusammenwirkender Bajonettzapfen (17a) vom Einbaurahmen (2) nach innen absteht.

4. Einbauleuchte nach einem der vorherigen Ansprüche,
**dadurch gekennzeichnet,**
**dass** die Rastvorrichtung (16) ein Rastelement (16a) aufweist, das zwischen einer in eine Rastausnehmung (16b) einfassenden Raststellung und einer Freigabestellung bewegbar ist, vorzugsweise quer zum Umfang des Leuchtelementen-Trägers (6) oder Einbaurahmens (2).

5. Einbauleuchte nach Anspruch 4,
**dadurch gekennzeichnet,**
**dass** das Rastelement (17a) von außerhalb der Einbauleuchte (1) her bewegbar ist, insbesondere entrastbar ist.

6. Einbauleuchte nach Anspruch 4 oder 5,
**dadurch gekennzeichnet,**
**dass** das Rastelement (17a) durch eine Federkraft in seine Raststellung vorgespannt ist, vorzugsweise nach außen vorgespannt ist.

7. Einbauleuchte nach einem der vorherigen Ansprüche 4 bis 6,
**dadurch gekennzeichnet,**
**dass** das Rastelement (16a) durch eine Ausnehmung (2g, 20) hindurch, die im freien Randbereich des Einbaurahmens (2) und/oder an der Unterseite einer den Rand der Öffnung (3) abdeckenden Abdeckringes (11) angeordnet ist, in seine Entrastungsstellung bewegbar ist, z.B. durch eine Druckausübung.

8. Einbauleuchte nach einem der vorherigen Ansprüche,
**dadurch gekennzeichnet,**
**dass** der Einbaurahmen (2) einen Flansch (2e) aufweist, der von einem Abdeckring (11) des Leuchtelementen-Trägers (6) wenigstens teilweise abgedeckt ist oder mit einem abgewinkelten Rand (11a) übergriffen ist.

9. Einbauleuchte nach einem der vorherigen Ansprüche,
**dadurch gekennzeichnet,**
**dass** der Leuchtelementen-Träger (6) einen transparenten Lichtleiterblock (14) und seitlich von diesem Anschlussmittel für mindestens ein Leuchtenelement aufweist, derart, dass von dem Leuchtenelement abgegebenes Licht seitlich in den Lichtleiterblock (14) einstrahlt und von diesem umgelenkt wird.

10. Einbauleuchte nach einem der vorherigen Ansprüche,
**dadurch gekennzeichnet,**
**dass** der Leuchtelementen-Träger (6) zur Aufnahme von Leuchtdioden (13) ausgebildet ist.

11. Einbauleuchte nach Anspruch 9 oder 10,
**dadurch gekennzeichnet,**
**dass** der Lichtleiterblock (14) eine Einkoppelscheibe (19a) und eine daran angeordnete Auskoppelscheibe (19b) aufweist, die vorzugsweise mit dem Lichtleiterblock verklebt ist und an ihrer im Lichtleiterblock (14) abgewandten Seite eine lichtauskoppelnde Struktur aufweist.

12. Einbauleuchte nach Anspruch 10 oder 11,
**dadurch gekennzeichnet,**
**dass** die Leuchtdioden (13) an einer Leiterplatte (21) angeordnet sind, die vorzugsweise in einer Steckfassung (22) eingesteckt ist.

## Claims

1. Recessed luminaire (1) for installation in an opening (3) of a wall or in the floor, having an installation frame (2) to be anchored in the opening (3) and a luminaire element carrier (6) which can be sunk into the installation frame (2),
**characterised in that**,
the luminaire element carrier (6) is connectable with the installation frame (2) by means of a bayonet connection (17) and a latch device (16), wherein the bayonet connection (17) and the latch device (16) are in substance arranged opposite one another in the edge regions of the installation frame (2) or luminaire element carrier (6).

2. Recessed luminaire according to claim 1,
**characterised in that**,
the luminaire element carrier (6) is rotatable around its middle axis (15a) in the installation frame (6), and the installation frame (2) and the carrier (6) have a round cross-section.

3. Recessed luminaire according to any preceding claim,
**characterised in that**,
a bayonet groove (17b) is arranged in the peripheral region of the luminaire element carrier (6) and a bayonet pin (17a) cooperating therewith projects inwardly from the installation frame (2).

4. Recessed luminaire according to any preceding claim,
**characterised in that**,
the latch device (16) has a latch element (16a), which is movable between a latch disposition engaging in a latch recess (16b) and a release position, preferably movable transversely of the periphery of the luminaire element carrier (6) or installation frame (2).

5. Recessed luminaire according to claims 4,
**characterised in that**,
the latch element (17a) is movable from outside of the recessed luminaire (1), in particular can be unlatched.

6. Recessed luminaire according to claim 4 or 5,
**characterised in that**,
the latch element (17a) is biased by means of a spring force into its latch position, preferably is biased outwardly.

7. Recessed luminaire according to any of preceding claims 4 to 6,
**characterised in that**,
the latch element (16a) is movable into its unlatched disposition, e.g. by means of an exercise of pressure, through a recess (2g, 20) which is arranged in the free edge region of the installation frame (2) and/or at the underside of a cover (11) covering the edge of the opening (3).

8. Recessed luminaire according to any preceding claim,
**characterised in that**,
the installation frame (2) has a flange (2e) which is at least partially covered over by a cover ring (11) of the luminaire element (6) or is engaged over with an angled edge (11a).

9. Recessed luminaire according to any preceding claim,
**characterised in that**,
the luminaire element carrier (6) has a transparent light guide block (14) and to the side thereof connection means for at least one luminaire element, such that the light emitted by the luminaire element radiates into the light guide block (14) from the side and is redirected by this light guide block.

10. Recessed luminaire according to any preceding claim,
**characterised in that**,
the luminaire element carrier (6) is configured for accommodating light emitting diodes (13).

11. Recessed luminaire according to claim 9 or 10,
**characterised in that**,
the light guide block (14) has arranged thereon an in-coupling plate (19a) and an out-coupling plate (19b, which is preferably adhesively connected with the light guide block and on its side away from the light block (14) has a light out-coupling structure.

12. Recessed luminaire according to claim 10 or 11,
**characterised in that**,
the light emitting diodes (13) are arranged on a circuit board (21), which is preferably inserted into a plug-in fitting (22).

## Revendications

1. Luminaire encastrable (1) destiné à être encastré dans une ouverture (3) ménagée dans un mur ou dans le sol, comportant un cadre d'encastrement (2) à ancrer dans l'ouverture (3), et un support de lampes (6) à incorporer dans le cadre d'encastrement (2),
**caractérisé en ce que**
le support de lampes (6) peut être assemblé au cadre d'encastrement (2) par l'intermédiaire d'un système à baïonnette (17) et d'un dispositif de blocage (16), le système à baïonnette (17) et le dispositif de blocage (16) étant disposés sensiblement face à face dans les zones de bordure du cadre d'encastrement (2) ou du support de lampes (6).

2. Luminaire encastrable selon la revendication 1,
**caractérisé en ce que**
le support de lampes (6) est apte à tourner autour de son axe médian (15a) dans le cadre d'encastrement (2), et le cadre d'encastrement (2) et le support (6) ont une section ronde.

3. Luminaire encastrable selon l'une des revendications précédentes, **caractérisé en ce qu'**une rainure de baïonnette (17b) est disposée dans la zone périphérique du support de lampes (6) et un téton de baïonnette (17a), coopérant avec celle-ci, est disposé en saillie vers l'intérieur sur le cadre d'encastrement (2).

4. Luminaire encastrable selon l'une des revendications précédentes, **caractérisé en ce que**
le dispositif de blocage (16) comporte un élément de blocage (16a), qui peut être déplacé entre une position de blocage, engagée dans un évidement de blocage (16b), et une position de déblocage, de préférence transversalement à la périphérie du support de lampes (6) ou du cadre d'encastrement (2).

5. Luminaire encastrable selon la revendication 4,
**caractérisé en ce que**
l'élément de blocage (16a) peut être déplacé, en particulier peut être encliqueté, depuis l'extérieur du luminaire encastrable (1).

6. Luminaire encastrable selon la revendication 4 ou 5,
**caractérisé en ce que**
l'élément de blocage (16a) est précontraint par la force d'un ressort dans sa position de blocage, de préférence est précontraint vers l'extérieur.

7. Luminaire encastrable selon l'une des revendications précédentes 4 à 6,
**caractérisé en ce que**
l'élément de blocage (16a) peut être déplacé, par exemple moyennant l'application d'une pression, dans sa position de déblocage en passant à travers un évidement (2g, 20), qui est disposé dans la zone de bordure libre du cadre d'encastrement (2) et/ou sur la face inférieure d'une bague de recouvrement (11) masquant le bord de l'ouverture (3).

8. Luminaire encastrable selon l'une des revendications précédentes, **caractérisé en ce que**
le cadre d'encastrement (2) comporte une collerette (2e), qui est masquée au moins en partie par une bague de recouvrement (11) du support de lampes (6) ou au-dessus de laquelle s'engage un bord plié (11a).

9. Luminaire encastrable selon l'une des revendications précédentes, **caractérisé en ce que**
le support de lampes (6) comporte un bloc de guidage de lumière (14) transparent et, sur le côté de celui-ci, des moyens de branchement pour au moins une lampe, de telle sorte que la lumière émise par la lampe parvient latéralement dans le bloc de guidage de lumière (14) et est déviée par ce dernier.

10. Luminaire encastrable selon l'une des revendications précédentes, **caractérisé en ce que**
le support de lampes (6) est réalisé pour recevoir des diodes électroluminescentes (13).

11. Luminaire encastrable selon la revendication 9 ou 10,
**caractérisé en ce que**
le bloc de guidage de lumière (14) comporte un disque d'entrée de lumière (19a) et un disque de sortie de lumière (19), qui est disposé sur ce dernier et qui est de préférence collé au bloc de guidage de lumière et comporte, sur sa face opposée au bloc de guidage de lumière (14), une structure laissant sortir la lumière.

12. Luminaire encastrable selon la revendication 10 ou 11,
**caractérisé en ce que**
les diodes électroluminescentes (13) sont disposées sur une plaquette de circuits imprimés (21) qui, de préférence, est enfichée dans une connexion (22).
